Europäisches Patentamt

European Patent Office

Office européen des brevets

(19)

(11) **EP 1 343 991 B1**

(12) **FASCICULE DE BREVET EUROPEEN**

(45) Date de publication et mention
de la délivrance du brevet:
**06.07.2005 Bulletin 2005/27**

(51) Int Cl.⁷: **F16K 31/06**, F16K 11/16,
F16K 11/04

(21) Numéro de dépôt: **01998760.1**

(22) Date de dépôt: **03.12.2001**

(86) Numéro de dépôt international:
**PCT/FR2001/003812**

(87) Numéro de publication internationale:
**WO 2002/044600 (06.06.2002 Gazette 2002/23)**

(54) **ELECTROVANNE PROPORTIONNELLE POUR CIRCUIT DE LIQUIDE DE REFROIDISSEMENT DE MOTEUR**

PROPORTIONALELEKTROVENTIL FÜR MOTORKÜHLFLÜSSIGKEITSKREISLAUF

PROPORTIONAL ELECTROVALVE FOR MOTOR COOLING LIQUID CIRCUIT

(84) Etats contractants désignés:
**DE ES FR GB IT SE**

(30) Priorité: **01.12.2000 FR 0015622**

(43) Date de publication de la demande:
**17.09.2003 Bulletin 2003/38**

(73) Titulaire: **EATON S.A.M.
MC-98000 Monaco (MC)**

(72) Inventeurs:
• **DRAGONI, Christian
F-06390 Bendejun (FR)**
• **HERMET, Emmanuel
F-06220 Vallauris (FR)**
• **HERNANDEZ, Michel
F-06480 La Colle Sur Loup (FR)**
• **ROSAZ, François
F-06700 St Laurent du Var (FR)**

(74) Mandataire: **Littolff, Denis
Meyer & Partenaires,
Conseils en Propriété Industrielle,
Bureaux Europe,
20, place des Halles
67000 Strasbourg (FR)**

(56) Documents cités:
**DE-A- 4 120 292**     **US-A- 3 791 408**
**US-A- 4 314 585**     **US-A- 5 168 898**
**US-A- 6 021 996**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

## Description

La présente invention concerne une électrovanne à réponse proportionnelle à un signal fourni sous la forme d'un courant inducteur de la bobine de l'électro-aimant sur lequel est basé ladite électrovanne. Selon un exemple préférentiel qui servira de fil conducteur à la suite de la description, une telle électrovanne est destinée à être utilisée pour contrôler le débit du liquide de refroidissement d'un moteur automobile.

Une électrovanne selon le préambule de la revendication 1 est connue du US 4314585.

Jusqu'ici, dans la plupart des cas, le débit de fluide caloporteur d'un moteur thermique est contrôlé par un dispositif de type vanne qui est fermée lorsque le liquide est froid, et qui s'ouvre lorsque le liquide s'échauffe. L'ouverture de la vanne est donc liée à la température du liquide de refroidissement.

L'unique condition qui est prise en compte pour modifier la position de la vanne est par conséquent la température du liquide de refroidissement, aucun autre contrôle externe n'étant mis en oeuvre. Dans les dispositifs connus, la précision du contrôle du débit est en outre limitée car le système utilisé est techniquement assez fruste. Enfin, leur fonctionnement implique un débit minimum car il n'est pas possible de stopper complètement le passage du liquide.

Le rendement et le fonctionnement du moteur automobile, ainsi que de toutes les fonctions annexes utilisant le fluide caloporteur, peuvent cependant être améliorés en utilisant un dispositif qui n'est pas autonome, au contraire de ce qui se fait actuellement, mais qui permet le contrôle du débit de fluide en fonction des conditions de fonctionnement du moteur.

C'est l'objectif principal de la présente invention.

Cette dernière a plus précisément pour objectif de proposer un dispositif pilotable par l'ordinateur du véhicule, permettant la prise en compte d'un grand nombre de paramètres dans la logique de contrôle du débit du liquide de refroidissement. Ainsi, outre la température du liquide, l'électrovanne de l'invention pourra être plus finement pilotée à l'aide de paramètres tels que la vitesse du moteur, la vitesse du véhicule, la température du moteur à différents endroits, ou encore la mise en route de systèmes auxiliaires tels que la climatisation.

Un objectif encore de l'invention est de proposer dans une configuration possible de l'invention un dispositif qui utilise un électro-aimant dont la géométrie des différentes pièces permet d'obtenir un effort de poussée relativement constant quelle que soit la valeur de l'entrefer, pour une valeur donnée du courant d'alimentation.

Selon un autre objectif encore, les configurations proposées pour l'invention n'imposeront pas l'existence d'un débit minimum, et permettront au contraire de fermer complètement la vanne.

Enfin, l'électrovanne de l'invention pourra être constituée en un module fonctionnel de type cartouche, insérable soit dans un bloc interface spécifique, soit dans un élément existant du véhicule automobile.

Pour remplir ces objectifs, et d'autres qui apparaîtront à la lecture de la description qui suit, l'électrovanne de l'invention, qui offre comme mentionné auparavant une réponse proportionnelle à un courant inducteur alimentant la bobine inductrice de son électro-aimant, comporte essentiellement une telle bobine, entourant un noyau mobile axialement, auquel est solidarisée une tige poussoir coulissant dans une pièce polaire du circuit magnétique fixe coopérant avec la bobine inductrice. Elle actionne une vanne comportant au moins une soupape rapportée à un arbre axial et coopérant avec un siège pour obtenir l'ouverture et la fermeture de la vanne, des moyens de rappel conférant à cette soupape une position de repos stable par rapport au siège lorsque le courant inducteur est nul. Chaque soupape est coaxiale à la tige poussoir et actionnée par elle. Selon une caractéristique principale, la liaison mécanique entre l'arbre de la soupape et, la tige poussoir ainsi que, le cas échéant, l'arbre de la soupape adjacente, se réduit à un contact ponctuel.

Cette particularité offre un avantage décisif au moment du montage, car il peut y avoir un léger désalignement dû à l'assemblage, notamment lorsqu'il y a plus qu'une soupape. Avec ce type de construction, le fonctionnement correct des soupapes n'est pas affecté par ce désalignement, du fait de l'existence de la liaison précitée entre les différentes parties, qui n'est pas rigide.

Plus précisément, l'arbre de chaque soupape coulisse par rapport à un corps de soupape dans lequel sont pratiqués au moins un orifice d'admission de fluide et au moins un orifice d'échappement de fluide, et dans lequel est conformé le siège de la soupape.

Lorsque plusieurs soupapes (en général deux) sont disposées à la suite l'une de l'autre, le contact ponctuel s'applique d'une part entre la tige poussoir et une première soupape dont le corps est disposé au contact de l'électro-aimant, et d'autre part entre la première et la seconde soupape.

De préférence, les moyens de rappel de la soupape à distance du siège sont constitués d'un ressort à boudins disposé autour de l'arbre de la soupape, dans un logement axial de celle-ci, ledit ressort reposant sur la partie centrale du siège de la soupape.

La présence de ces moyens de rappel est fonctionnellement très importante, car ils permettent d'assurer la cohésion mécanique de l'ensemble. En effet, les corps de soupape sont fixés par rapport à un boîtier entourant l'ensemble de l'électrovanne. Mais la pression de contact avec chacun des éléments axiaux adjacents précités est assurée au niveau de la soupape mobile, laquelle transmet en réalité la force que lui applique le ressort quelle que soit la force magnétique véhiculée par la tige poussoir.

Selon une configuration possible, la soupape et le corps de soupape présentent une géométrie de révolution, l'arbre de chaque soupape coulissant axialement dans le corps de soupape, dont le siège présente une orientation sensiblement perpendiculaire audit axe.

Une telle configuration permet un transfert optimal des efforts, et une gestion de l'ouverture / fermeture au passage du fluide la plus simple possible.

De préférence, la paroi externe du corps de soupape présente un logement périphérique prévu pour loger un joint torique.

Ce joint torique permet la fixation de chaque corps de soupape au boîtier externe formant l'enveloppe de l'électrovanne de l'invention. Ceci est vrai autant lorsque le montage du dispositif est réalisé dans un bloc interface spécifique que lorsque le montage est réalisé dans un élément existant du véhicule automobile, si c'est l'option choisie.

Outre ce joint externe, chaque soupape présente un joint que l'on peut qualifier d'interne, qui assure un débit très faible du liquide de refroidissement en position fermée du dispositif. Il s'agit d'un joint en élastomère surmoulé sur la portion de sa paroi périphérique prévue pour entrer en contact avec le siège.

Selon une possibilité particulièrement avantageuse, l'électrovanne de l'invention comporte en fait deux soupapes coaxiales dont les corps de soupape sont superposés dans l'axe de la tige poussoir.

Ce principe de double soupape permet de minimiser les efforts nécessaires au contrôle de l'électrovanne. Cette construction permet en outre de diminuer le poids ainsi que la consommation électrique du dispositif.

Selon une configuration possible, les deux soupapes sont maintenues par les moyens de rappel à distance de leurs sièges respectifs lorsque le courant inducteur est nul.

De préférence, les deux ensembles composés des soupapes et de leurs corps respectifs sont vissés l'un à l'autre.

Un tel montage assure la possibilité d'un réglage précis entre les deux ensembles, afin d'obtenir une fermeture simultanée des deux soupapes, et donc un débit très faible du liquide de refroidissement en position fermée du dispositif.

De préférence encore, les ensembles composés des soupapes et de leurs corps respectifs sont identiques et réalisés dans le même matériau.

Selon une possibilité, le matériau principal dans lequel sont réalisés ces ensembles est du polyamide.

D'une manière générale, il est à noter que le dispositif décrit ci-dessus est normalement ouvert, ce qui signifie que dans la cas où l'alimentation électrique du dispositif n'est plus assurée, l'électrovanne retourne en position de pleine ouverture des soupapes, réduisant ainsi les risques de panne du moteur thermique.

Le circuit magnétique coopérant avec la bobine inductrice comporte, outre le noyau mobile, deux pièces polaires fixes d'allure coaxiale au noyau, entre lesquelles ce dernier coulisse, la pièce polaire dans laquelle coulisse la tige poussoir ainsi que le noyau présentant dans la zone définissant leur entrefer des formes respectives permettant d'obtenir un effort de poussée sensiblement constant quelle que soit la distance de l'entrefer, pour une valeur donnée du courant inducteur.

Cette configuration permet d'aboutir à une précision et un contrôle optimaux du débit, ainsi que de la position des parties mobiles du dispositif dans des états intermédiaires entre la pleine ouverture et la pleine fermeture.

Plus précisément, le noyau magnétique mobile présente une géométrie cylindrique, la pièce polaire dans laquelle coulisse la tige poussoir étant munie sur son côté en vis à vis dudit noyau d'un logement cylindrique de diamètre supérieur à celui du noyau, définissant deux orientations perpendiculaires pour l'entrefer lorsque le noyau pénètre dans ledit logement.

Ce type de configuration joue sur le fait que la force d'attraction entre le noyau mobile et la pièce polaire est liée aux lignes de flux magnétiques au niveau de l'entrefer. Or, seule la composante axiale des lignes de flux contribue à la force de fermeture de la vanne. Par conséquent, l'utilisation d'une telle configuration, dérivant une partie croissante des lignes de flux dans une direction d'allure perpendiculaire à l'axe de coulissement, permet d'obtenir un effort constant sur une plage importante de la course.

Cette configuration n'est cependant pas toujours recherchée. Ainsi, selon une possibilité, l'électrovanne de l'invention peut ne comporter qu'une seule soupape coulissant dans son corps de soupape. Elle peut également être dotée d'un circuit magnétique coopérant avec la bobine inductrice qui comporte, outre le noyau mobile, deux pièces polaires fixes d'allure coaxiale audit noyau, entre lesquelles ce dernier coulisse, la pièce polaire dans laquelle coulisse la tige poussoir et le noyau mobile présentant dans la zone définissant leur entrefer des formes respectives permettant d'obtenir un effort de poussée qui augmente lorsque la distance de l'entrefer se réduit, pour une valeur donnée du courant inducteur.

C'est le cas lorsqu'un contrôle proportionnel du liquide de refroidissement n'est pas nécessaire, un contrôle tout ou rien étant à l'inverse suffisant. Dans ce cas, l'électro-aimant est modifié pour augmenter l'effort fourni à proximité de la fermeture de la vanne, afin de diminuer la fuite lorsque l'on est en position fermée.

Dans une telle configuration, les surfaces en regard de la pièce polaire dans laquelle coulisse la tige poussoir et du noyau mobile, définissant leur entrefer, sont d'allure parallèle.

L'invention comporte également d'autres possibilités fonctionnelles visant à optimiser son comportement. Ainsi, la position initiale du noyau mobile, lorsque le courant inducteur est nul, est réglable par une vis accessible depuis l'extérieur du boîtier de l'électrovanne, qui modifie la compression d'un ressort disposé entre elle et le noyau mobile, la force de rappel dudit ressort s'exerçant axialement vers la pièce polaire dans laquelle coulisse la tige poussoir.

Cette construction permet notamment le calibrage du dispositif lors de son assemblage, ou son re-calibrage en cas de problème ou de modification du fonctionnement.

Selon une possibilité, le noyau mobile comporte de plus des moyens de réaliser un filtrage des vibrations externes susceptibles de provoquer des mouvements des parties mobiles sans relation avec le courant de commande.

Plus précisément, lesdits moyens de filtrage consistent en un conduit axial pratiqué dans le noyau mobile, reliant deux chambres définies entre ce dernier et les pièces polaires fixes, à l'intérieur de la bobine, lesdites chambres étant remplies de liquide de refroidissement qui passe d'une chambre à l'autre via le conduit du noyau en cas de déplacement de ce dernier.

L'électrovanne de l'invention peut en effet être utilisée dans des environnements potentiellement soumis à de fortes vibrations. Ces vibrations externes sont bien entendu parasites par rapport au fonctionnement du dispositif, et doivent être filtrée. On utilise à cet effet la possibilité de passage du fluide entre les deux chambres, au moyen de ce qu'il est convenu d'appeler une restriction hydraulique dans l'électro-aimant. Lors des mouvements du noyau, le liquide de refroidissement est contraint de passer d'une chambre à l'autre, et la section du conduit provoque le ralentissement de la vitesse de déplacement du noyau. La section de passage dudit conduit dans le noyau est choisie de façon à filtrer les mouvements rapides résultant des vibrations rencontrées, pouvant perturber le bon fonctionnement du dispositif.

De manière générale, l'électrovanne de l'invention peut être intégrée à un dispositif de contrôle du débit d'un fluide, soit sous la forme d'une cartouche en faisant un composant externe intégrable à une interface spécifique, soit directement dans la structure du moteur du véhicule automobile, par exemple en remplacement d'une vanne de l'art antérieur.

L'invention va à présent être décrite plus en détail, en référence aux figures annexées pour lesquelles :

la figure 1 montre une électrovanne en vue en section, dans sa configuration à deux soupapes, en position ouverte ;
la figure 2 est similaire à la figure 1, l'électrovanne y étant représentée en position fermée ; et
la figure 3 présente une configuration à une seule soupape.

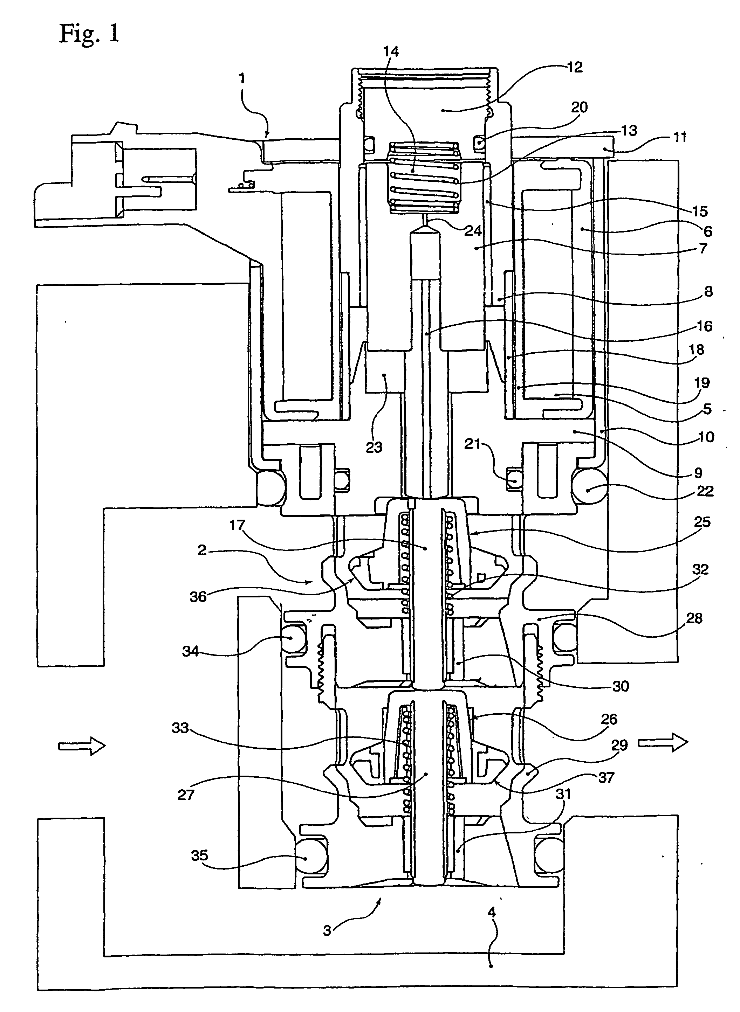

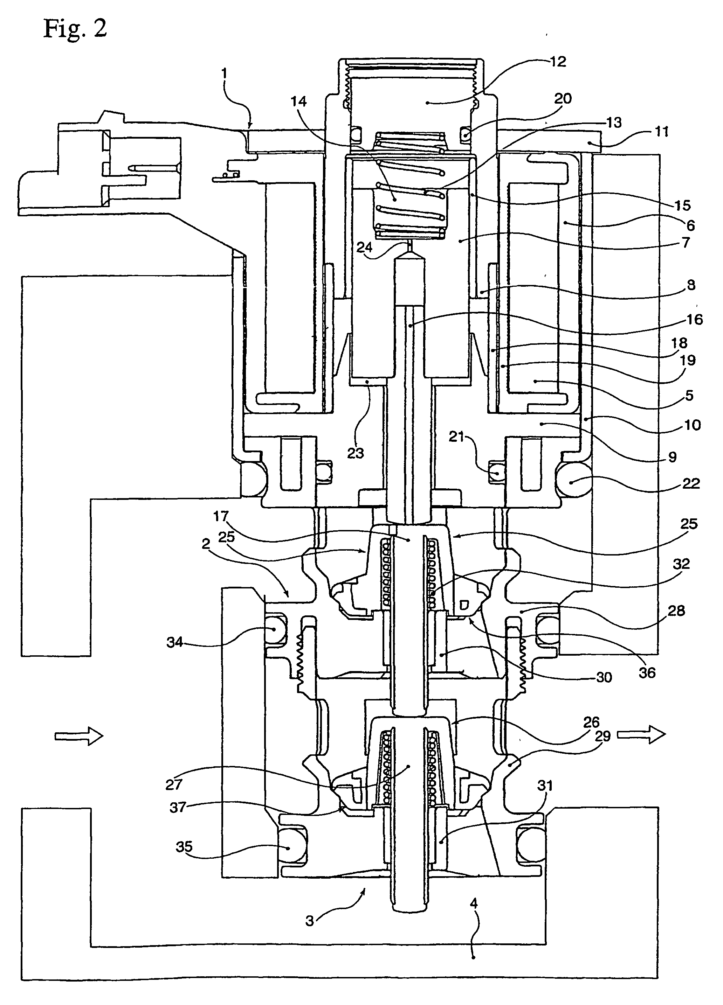

En référence aux figures 1 et 2, dont la seule différence réside dans l'état d'ouverture et de fermeture des soupapes, l'électrovanne de l'invention se compose schématiquement d'un électro-aimant (1), de deux vannes à soupape (2) et (3), l'ensemble étant indus dans un boîtier (4) prenant par exemple la forme d'une cartouche. L'électro-aimant (1) proprement dit se compose d'une bobine (5) à la périphérie de laquelle se trouve une enveloppe surmoulée (6) et qui coopère avec un circuit magnétique composé des éléments suivants : un noyau mobile (7) entouré axialement de deux pièces polaires respectivement haute (8) et basse (9), d'une carcasse magnétique externe (10), l'ensemble étant maintenu par une bride (11).

Le noyau magnétique (7) peut être calibré au moyen d'une vis de calibrage (12) assurant la compression / décompression d'un ressort (13) inséré dans des logement d'allure cylindrique respectivement pratiqués dans le noyau mobile (7) et la vis (12), et qui forment ensemble une chambre dite supérieure (14).

Le noyau mobile (7) est séparé de la pièce polaire supérieure (8) par une bague (15) destinée à faciliter le mouvement de coulissement de l'un par rapport à l'autre.

Le noyau mobile (7) présente, dépassant de son extrémité opposée à celle qui comporte le ressort (13), une tige poussoir (16) qui coulisse à l'intérieur de la pièce polaire basse (9), et coopère avec la partie supérieure de la soupape (2) adjacente à l'électro-aimant (1), par contact ponctuel de son extrémité avec l'extrémité supérieure de l'arbre (17) de ladite soupape (2).

L'électro-aimant (1) se compose par ailleurs d'autres éléments fonctionnels usuels, du type tube (18), carcasse (19) et différents joints de fonctionnement. Ainsi, un joint d'étanchéité (20) est disposé entre la vis de calibrage (12) et la pièce polaire (8). De plus, en partie inférieure, la pièce polaire basse (9) comporte un logement prévu pour recevoir un joint torique (21), réalisant l'étanchéité avec la structure inférieure de l'électro-aimant. Un autre joint (22), également torique, sépare cette dernière du boîtier extérieur (4).

Ces joints ont pour fonction de réaliser une étanchéité car du liquide de refroidissement circule à l'intérieur de l'électro-aimant. Ce liquide occupe en effet la chambre supérieure (14) de l'électro-aimant, ainsi que le volume disposé entre le noyau mobile (8) et la pièce polaire basse, définissant la chambre inférieure (23) de l'électro-aimant.

Il est notamment utilisé comme moyen de filtrer les vibrations mécanique externes qui s'appliquent au dispositif de l'invention, au moyen de l'existence d'un canal ou restriction hydraulique (24) reliant la chambre supérieure (14) à la chambre inférieure (23). Les vibrations externes ne peuvent alors pas se répercuter au noyau, car le passage du fluide d'une chambre à l'autre, lorsque ces vibrations se produisent, ralentit ledit noyau (7) qui est empêché de refléter par des déplacements axiaux lesdites vibrations.

L'ensemble mobile de l'électro-aimant (1), constitué du noyau mobile (8) et du poussoir (16), a évidemment pour fonction de déplacer les vannes (2) et (3), constituées chacune d'une soupape (25, 26) rapportée à un arbre axial (17, 27), ledit arbre coulissant dans le corps central (28, 29) de chacune des soupapes (2, 3), dans lequel se trouve notamment le siège de ces dernières. La partie centrale desdits corps (28, 29) dans laquelle coulissent les arbres (17, 27) se présente en fait sous la forme d'une bague (30, 31) sur laquelle repose le ressort (32, 33) maintenant la soupape (25, 26) à distance du siège du corps de soupape (28, 29).

Ces corps (28, 29) présentent un logement externe pouvant recevoir des joints toriques (34, 35) réalisant en l'étanchéification entre lesdits corps (28, 29) et le boîtier (4), et aidant à sa fixation.

Il est à noter que la portion de la surface périphérique des soupapes (25, 26) destinée à entrer en contact avec le siège du corps de soupape (28, 29) est munie d'un joint élastomère surmoulé (36, 37) assurant un débit très faible du liquide de refroidissement en position fermée du dispositif.

Les flèches noires indiquent le passage du fluide. Le dispositif de l'invention comporte par conséquent trois groupes d'ouvertures distinctes, les groupes supérieur et inférieur permettant l'entrée du liquide de refroidissement dans le dispositif, alors que le groupe médian permet la sortie du liquide de refroidissement du dispositif.

Il est bien entendu possible d'inverser le flux et donc d'utiliser le groupe médian pour l'entrée et les groupes supérieur et inférieur pour la sortie.

Le flux de liquide qui pénètre dans l'électrovanne par l'entrée du corps externe (4) à une pression $P_1$ se partage en deux : une partie du flux passe par l'orifice formé entre le corps (28) de la vanne supérieure (2), et la soupape supérieure (25) revêtue du joint (36). L'autre partie du flux passe par l'orifice formé par le corps (29) de la vanne inférieure (3) et la soupape inférieure (26) munie de son joint élastomère (37).

Les deux flux se regroupent ensuite avant de ressortir de l'électrovanne par la sortie du boîtier (4), à une pression $P_2$. Lors de son passage au travers de l'électrovanne, le fluide subit une chute de pression $\Delta P$ due principalement aux restrictions de sections S formées par les orifices définis par les deux sièges dans les deux corps de vanne (28, 29) et les deux soupapes (25, 26).

$$\Delta P = P_1 - P_2.$$

La caractéristique hydraulique d'un orifice établit la relation entre le débit, la pression différentielle et l'ouverture de l'orifice. Elle est modélisée par la relation

$$Q = C_q S \sqrt{2\Delta P/\rho}$$

où $Q$ est le débit volume traversant l'orifice ($m^3/s$)

$C_q$ est le coefficient de débit(-)

S est la section de passage offerte au fluide par la restriction mobile ($m^2$)

$\rho$ est la masse volumique du fluide ($kg/m^3$)

$\Delta P$ est la pression différentielle vue par l'orifice (Pa)

Cette relation implique que pour une chute de pression $\Delta P$ donnée, le débit traversant le dispositif peut être contrôlé en procédant à un changement de section du passage S (les variations de $C_q$ et $\rho$ étant nulles ou négligeables).

La bobine est alimentée par un signal électrique. Ce signal d'alimentation peut être de deux types : soit un courant contrôlé, soit une tension hachée à une fréquence fixe avec un contrôle du rapport cyclique à l'ouverture, selon des modalités connues en soi.

La géométrie des différentes pièces du sous-ensemble électro-aimant est choisie de sorte que pour une valeur donnée du signal d'alimentation de la bobine (5) corresponde un effort de poussé relativement constant du sous-ensemble mobile (7, 16) de l'électro-aimant (1) sur les parties mobiles (17, 25, 26, 27) de la vanne quelle que soit la valeur de la course. L'effort de poussée exercé par le poussoir peut en tout état de cause être contrôlé en faisant varier le signal d'alimentation.

Les différents éléments du sous-ensemble mobile (7, 16) de l'électro-aimant (1) et les parties mobiles (17, 25, 26, 27) de la vanne sont maintenues en contact entre eux par l'effort exercé par les ressorts (32, 33). En position repos, lorsque la bobine (5) n'est pas alimentée ($I = I_0$), le sous-ensemble mobile de l'électro-aimant (7, 16) n'exerce aucun effort sur le sous-ensemble mobile (17, 25, 26, 27) de la vanne qui se trouve donc en position d'ouverture maximum. Lorsque la bobine (5) est alimentée, le sous-ensemble mobile (17, 25, 26, 27) de la vanne se déplace, ce qui engendre une réduction simultanée des deux orifices formés par les deux sièges des deux corps (28, 29) de vanne et leurs soupapes (25, 26) respectives. Pour une alimentation donnée ($I = I_1$), les deux soupapes (25, 26) et leurs joints (36, 37) entrent en contact avec les deux sièges des deux corps (28, 29) de vanne, ce qui empêche le liquide de circuler à travers l'électrovanne. Pour un courant d'alimentation intermédiaire ($I = I_{int}$ avec $I_0 < I_{int} < I_f$) le sous-ensemble mobile (17, 25, 26, 27) de la vanne se met dans une position d'ouverture intermédiaire. Dans cette position d'ouverture intermédiaire, l'effort exercé par le sous-ensemble mobile (7, 16) de l'électro-aimant et son ressort (13) sur le sous-ensemble mobile (17, 25, 26, 27) de la vanne est égal, mais de direction opposée à l'effort exercé par la résultante des ressorts sur le sous-ensemble mobile (17, 25, 26, 27) de la vanne.

Le contrôle du signal d'alimentation permet donc de contrôler de façon précise la position des deux soupapes (25, 26) par rapport à leur siège respectif, de contrôler la section de passage offerte au fluide et donc de contrôler le débit volume de fluide traversant le dispositif.

Dans la construction à double soupape, les efforts nécessaires au positionnement de l'ensemble mobile de l'électrovanne sont réduits par l'utilisation d'une construction à double soupape, lesdites soupapes étant de tailles identiques. Dans ce cas, la somme des forces exercées sur l'ensemble mobile et liées à la pression d'entrée ou à la pression de sortie de l'électrovanne est nulle.

Les relations s'écrivent :

$$A_{sh} = A_{sb}$$

$$\Sigma F_{P1\ sur\ Bm} = (P_1 \times A_{sh}) - (P_1 \times A_{sb}) = 0$$

$$\Sigma F_{P2\ sur\ Bm} = (P_2 \times A_{sh}) - (P_2 \times A_{sb}) = 0$$

avec:

$\Sigma F_{P1\ sur\ Bm}$ : somme des forces liées à la pression d'entrée qui s'appliquent sur le sous-ensemble mobile (17, 25, 26, 27) de la vanne.
$\Sigma F_{P2\ sur\ Bm}$ : somme des forces liées à la pression de sortie qui s'appliquent sur le sous-ensemble mobile (17, 25, 26, 27) de la vanne.
$A_{sh}$ : surface effective de la soupape haute (25).
$A_{sb}$ : surface effective de la soupape basse (26).

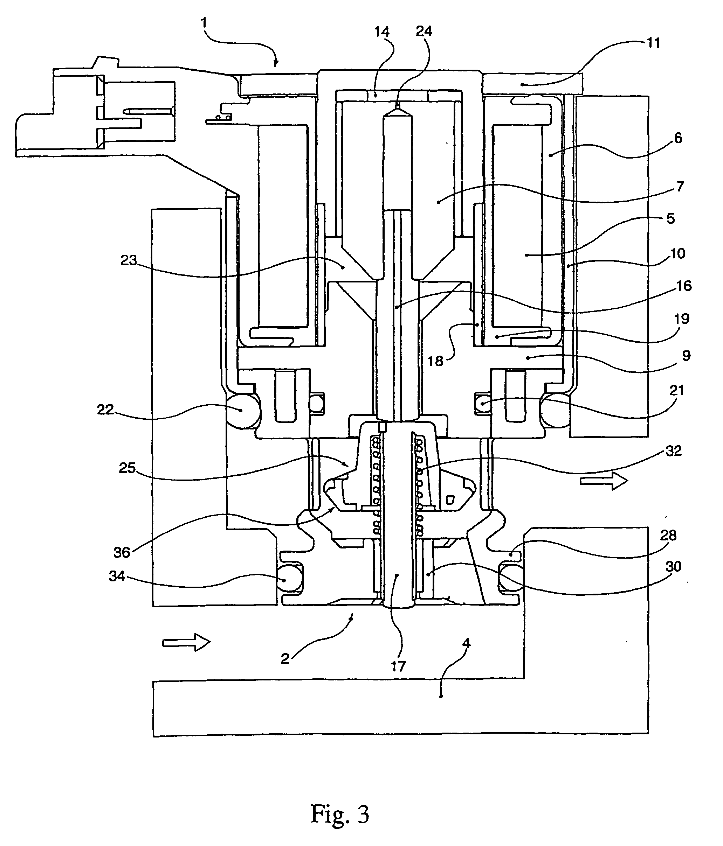

En variante, il est possible de mettre en oeuvre une configuration dans laquelle le contrôle proportionnel du débit du liquide de refroidissement n'est pas nécessaire. C'est la configuration qui est montrée en figure 3 pour laquelle le dispositif est simplifié et ne requiert pas l'utilisation d'une vis de calibrage. Dans ce cas, la forme relative du noyau mobile (7) et de la pièce polaire basse (9) dans la zone de l'entrefer est simplement conique, et la courbe d'augmentation de l'effort de poussée en fonction de la diminution de distance de l'entrefer s'élève de plus en plus rapidement à mesure que cette distance diminue.

Dans ce cas, le contrôle précis de la position des parties mobiles du dispositif dans des états intermédiaires entre la pleine ouverture et la pleine fermeture n'est pas recherché.

Dans cette figure 3, les mêmes références ont été utilisées pour les composants qui sont identiques ou similaires aux composants apparaissant dans les figures précédentes.

Les exemples expliqués ci-dessus ne sont bien entendu pas limitatifs de l'invention, qui englobe au contraire les variantes de formes et de configurations qui sont à la portée de l'homme de l'art.

**Revendications**

1. Electrovanne à réponse proportionnelle à un courant inducteur alimentant une bobine inductrice (5) entourant un noyau (7) mobile axialement, auquel est solidarisée une tige poussoir (16) coulissant dans une pièce polaire (9) du circuit magnétique fixe coopérant avec la bobine inductrice (5), actionnant une vanne comportant au moins une soupape (25, 26) rapportée à un arbre axial (17, 27), et coopérant avec un siège pour obtenir l'ouverture et la fermeture de la vanne, des moyens de rappel (32, 33) lui conférant une position de repos stable par rapport au siège lorsque le courant inducteur est nul, chaque soupape (25, 26) étant coaxiale à la tige poussoir et actionnée par elle, **caractérisée en ce que** la liaison mécanique entre l'arbre (17) de la soupape (25) et la tige poussoir (16) ainsi que, le cas échéant, l'arbre (27) de la soupape adjacente (26), se réduit à un contact ponctuel.

2. Electrovanne selon la revendication précédente, **caractérisée en ce que** l'arbre (17, 27) de chaque soupape (25, 26) coulisse par rapport à un corps de soupape (28, 29) dans lequel sont pratiqués au moins un orifice d'admission de fluide et au moins un orifice d'échappement de fluide, et dans lequel est conformé le siège de la soupape (25, 26).

3. Electrovanne selon la revendication précédente, **caractérisée en ce que** les moyens de rappel de la soupape (25, 26) à distance du siège sont constitués d'un ressort à boudins (32, 33) disposé autour de l'arbre (17, 27) de la soupape (25, 26), dans un logement axial de celle-ci, et reposant sur la partie centrale du siège de la soupape (25, 26).

4. Electrovanne selon l'une des revendications 2 et 3, **caractérisée en ce que** la soupape (25, 26) et le corps de soupape (28, 29) présentent une géométrie de révolution, l'arbre (17, 27) de chaque soupape (25, 26) coulissant axialement dans le corps de soupape (28, 29), dont le siège présente une orientation sensiblement perpendiculaire audit axe.

5. Electrovanne selon la revendication précédente, **caractérisée en ce que** la paroi externe du corps de soupape (28, 29) présente un logement périphérique prévu pour loger un joint torique (34, 35).

6. Electrovanne selon l'une quelconque des revendications précédentes, **caractérisée en ce que** chaque soupape (25, 26) présente un joint en élastomère (36, 37) surmoulé sur la portion de sa paroi périphérique prévue pour entrer en contact avec le siège.

7. Electrovanne selon l'une quelconque des revendications précédentes, **caractérisée en ce qu'**elle comporte deux soupapes (25, 26) coaxiales dont les corps de soupape (28, 29) sont superposés dans l'axe de la tige poussoir (16).

8. Electrovanne selon la revendication précédente, **caractérisée en ce que** les deux soupapes (25, 26) sont maintenues par les moyens de rappel (32, 33) à distance de leurs sièges respectifs lorsque le courant inducteur est nul.

9. Electrovanne selon l'une des revendications 7 et 8, **caractérisée en ce que** les deux ensembles composés des soupapes (25, 26) et de leurs corps (28, 29) respectifs sont vissés l'un à l'autre.

10. Electrovanne selon l'une des revendications 7 à 9, **caractérisée en ce que** les ensembles composés des soupapes (25, 26) et de leurs corps (28, 29) respectifs sont identiques et réalisés dans le même matériau.

11. Electrovanne selon l'une quelconque des revendications précédentes, **caractérisée en ce que** le circuit magnétique coopérant avec la bobine inductrice (5) comporte, outre le noyau mobile (7), deux pièces polaires (8, 9) fixes d'allure coaxiale au noyau (7), entre lesquelles ce dernier coulisse, la pièce polaire (9) dans laquelle coulisse la tige poussoir (16) et le noyau (7) présentant dans la zone définissant leur entrefer des formes respectives permettant d'obtenir un effort de poussée sensiblement constant quelle que soit la distance de l'entrefer, pour une valeur donnée du courant inducteur.

12. Electrovanne selon la revendication précédente, **caractérisée en ce que** le noyau magnétique mobile (7) présente une géométrie cylindrique, la pièce polaire (9) dans laquelle coulisse la tige poussoir (16) étant munie sur son côté en vis à vis dudit noyau d'un logement cylindrique de diamètre supérieur à celui du noyau, définissant deux orientations perpendiculaires pour l'entrefer lorsque le noyau pénètre dans ledit logement.

13. Electrovanne selon l'une quelconque des revendications 1 à 10, **caractérisée en ce que** le circuit magnétique coopérant avec la bobine inductrice (5) comportant, outre le noyau mobile (7), deux pièces polaires (8, 9) fixes d'allure coaxiale audit noyau (7), entre lesquelles ce dernier coulisse, la pièce polaire (9) dans laquelle coulisse la tige poussoir (16) et le noyau mobile (7) présentant dans la zone définissant leur entrefer des formes respectives permettant d'obtenir un effort de poussée qui augmente lorsque la distance de l'entrefer se réduit, pour une valeur donnée du courant inducteur.

14. Electrovanne selon la revendication précédente, **caractérisée en ce que** les surfaces en regard de la pièce polaire (9) dans laquelle coulisse la tige poussoir (16) et du noyau mobile (7), définissant leur entrefer, sont d'allure parallèle.

15. Electrovanne selon l'une quelconque des revendications précédentes, **caractérisée en ce que** la position initiale du noyau mobile (7), lorsque le courant inducteur est nul, est réglable par une vis (12) accessible depuis l'extérieur du boîtier (4) de l'électrovanne, et qui modifie la compression d'un ressort (13) disposé entre elle et le noyau mobile (7), la force de rappel dudit ressort (13) s'exerçant axialement vers la pièce polaire (9) dans laquelle coulisse la tige poussoir (16).

16. Electrovanne selon l'une quelconque des revendications précédentes, **caractérisée en ce que** le noyau mobile (7) comporte des moyens de filtrage des vibrations externes susceptibles de provoquer des mouvements des parties mobiles sans relation avec le courant de commande.

17. Electrovanne selon la revendication précédente, **caractérisée en ce que** lesdits moyens de filtrage consistent en un conduit axial (24) pratiqué dans le noyau mobile (7), reliant deux chambres (14, 23) définies entre ce dernier et les pièces polaires fixes (8, 9), à l'intérieur de la bobine (5), lesdites chambres (14, 23) étant remplies d'un liquide de refroidissement qui passe d'une chambre (14, 23) à l'autre via le conduit (24) du noyau (7) en cas de déplacement de ce dernier.

18. Dispositif permettant de contrôler le débit d'un fluide, basé sur une électrovanne selon l'une quelconque des revendications précédentes, **caractérisé en ce que** ladite électrovanne est intégrée dans un boîtier de type cartouche.

19. Utilisation d'un dispositif selon la revendication précédente pour contrôler le débit du liquide de refroidissement d'un moteur, en particulier d'automobile.

**Patentansprüche**

1. Elektro- bzw. Magnetventil mit Proportional-Ansprechverhalten auf einen Induktionsstrom, der eine Induktionswicklung (5) speist, welche einen achsial beweglichen Kern (7) umgibt, der mit einer Stoßstange bzw. Stößel (16) verbunden ist, die in einem feststehenden, mit der Induktionswicklung zusammenwirkenden Polschuh bzw. Polstück (9) des Magnetkreises gleitet und eine Ventilvorrichtung betätigt, welche wenigstens ein an einer achsialen Welle bzw. Spindel (17, 27) angeordnetes Ventil (25, 26) aufweist, das mit einem Sitz zum Schließen und zum Öffnen der Ventilvorrichtung zusammenwirkt, wobei Rückholmittel (32, 33) dem Ventil eine stabile Ruhestellung relativ bezüglich dem Sitz verleihen, wenn der Induktionsstrom Null beträgt, und wobei jeweils jedes Ventil (25, 26) koaxial bezüglich der Stoßstange ist und von dieser betätigt wird,
**dadurch gekennzeichnet, daß** die mechanische Verbindung zwischen der Welle bzw. Spindel (17) des Ventils (25) und der Stoßstange bzw. Stößel (16) sowie gegebenenfalls der Welle bzw. Spindel des benachbarten Ventils (26) auf einen Punktkontakt reduziert ist.

2. Elektro-bzw. Magnetventil nach dem vorhergehenden Anspruch, **dadurch gekennzeichnet,daß** die Welle bzw. Spindel (17, 27) jedes Ventils (25, 26) jeweils relativ bezüglich einem Ventilkörper (28, 29) gleitbar ist, in welchem wenigstens eine Strömungsmittel-Zutrittsöffnung und wenigstens eine Strömungsmittel-Austrittsöffnung vorgesehen sind und in welcher der Sitz des Ventils (25, 26) ausgebildet ist.

3. Elektro- bzw. Magnetventil nach dem vorhergehenden Anspruch, **dadurch gekennzeichnet daß** die Mittel zur Rückholung des Ventils (25, 26) auf Abstand von dem Sitz aus einer Schraub- bzw. Wendelfeder (32, 33) bestehen, die um die Welle bzw. Spindel (17, 27) des Ventils herum in einer achsialen Ausnehmung des Ventils angeordnet ist und auf dem Mittelteils des Sitzes des Ventils (25, 26) ruht.

4. Elektro- bzw. Magnetventil nach einem der Ansprüche 2 und 3, **dadurch gekennzeichnet, daß** das Ventil (25, 26) und der Ventilkörper (28, 29) rotationssymmetrisch ausgebildet sind und daß die Welle bzw. Spindel (17, 27) jedes Ventils (25, 26) axial in dem Ventilkörper (28, 29) gleitbar sind, dessen Sitz eine zu der genannten Achse im wesentlichen rechtwinkelige Ausrichtung aufweist.

5. Elektro- bzw. Magnetventil nach dem vorhergehenden Anspruch, **dadurch gekennzeichnet, daß** die Außenwandung des Ventilkörpers (28, 29) eine Umfangsausnehmung zur Aufnahme einer Ringdichtung aufweist.

6. Elektro- bzw. Magnetventil nach einem der vorhergehenden Ansprüche, **dadurch gekennzeichnet, daß** jeweils jedes Ventil (25, 26) eine Elastomer-Dichtung aufweist, die auf dem zum Kontakt mit dem Sitz vorgesehenen Teil seiner Umfangswandung aufgeformt ist.

7. Elektro- bzw. Magnetventil nach einem der vorhergehenden Ansprüche, **dadurch gekennzeichnet,**

**daß** die Ventilvorrichtung zwei koaxiale Ventile (25, 26) aufweist, deren Ventil-körper (28, 29) längs der Achse der Stoßstange bzw. Stößels (16) übereinander angeordnet sind.

8. Elektro- bzw. Magnetventil nach dem vorhergehenden Anspruch, **dadurch gekennzeichnet, daß** die beiden Ventile (25, 26) durch die Rückholmittel (32, 33) in Abstand von ihren jeweiligen Sitzen gehalten werden, wenn der Induktionsstrom Null beträgt.

9. Elektro- bzw. Magnetventil nach einem der Ansprüche 7 und 8, **dadurch gekennzeichnet, daß** die beiden zusammengesetzten Aggregate aus den Ventilen (25, 26) und ihren entsprechenden Ventilkörpern (28, 29) miteinander verschraubt sind.

10. Elektro-bzw. Magnetventil nach einem der Ansprüche 7 bis 9, **dadurch gekennzeichnet, daß** die zusammengesetzten Aggregate aus den Ventilen (25, 26) und ihren betreffenden Ventilkörpern (28, 29) gleichartig und aus dem gleichen Material hergestellt sind.

11. Elektro-bzw. Magnetventil nach einem der vorhergehenden Ansprüche, **dadurch gekennzeichnet, daß** der mit der Induktionswicklung (5) zusammenwirkende Magnetkreis außer dem beweglichen Kern (7) zwei feststehende Polschuhe bzw. Polstücke (8, 9) von bezüglich dem Kern (7) koaxialem Verlauf aufweist, zwischen welchen der Kern gleitbar ist und daß der Polschuh (9), in welchem die Stoßstange bzw. Stößel (16) gleitbar ist, und der Kein (7) in der Zone, welche ihren Luftspalt definiert, jeweils einen Formverlauf aufweisen, welcher für einen gegebenen Wert des Induktionsstroms die Erzielung einer unabhängig von der Spaltweite im wesentlichen konstanten Stoßkraft gestattet.

12. Elektro- bzw. Magnetventil nach dem vorhergehenden Anspruch, **dadurch gekennzeichnet, daß** der bewegliche Magnetkern (7) eine zylindrische Geometrie besitzt, und daß der Polschuh bzw. das Polstück (9), in welchem die Stoßstange bzw. Stößel (16) gleitbar ist, auf seiner dem genannten Kern gegenüberliegenden Seite mit einer zylindrischen Ausnehmung von größerem Durchmesser als der Kern versehen ist, welche zwei rechtwinklige Richtungen für den Spalt definiert, wenn der Kern in die genannte Ausnehmung eintritt.

13. Elektro- bzw. Magnetventil nach einem der Ansprüche 1 bis 10, **dadurch gekennzeichnet, daß** der mit der Induktionswicklung (5) zusammenwirkende Magnetkreis außer dem beweglichen Kern (7) zwei feststehende Polschuhe bzw. Polstüske (8, 9) von bezüglich dem Kern (7) koaxialem Verlauf aufweist, zwischen welchen der Kern gleitbar ist, und daß der Polschuh bzw. das Polstück (9), in welchem die Stoßstange bzw. Stößel (16) gleitbar ist und der bewegliche Kern (7) in der ihren Spalt bestimmenden Zone jeweils einen Formverlauf besitzen, welcher für einen gegebenen Wert des Induktionsstroms die Erzielung einer mit abnehmender Spaltweite zunehmenden Stoßkraft gestattet.

14. Elektro-bzw. Magnetventil nach dem vorhergehenden Anspruch, **dadurch gekennzeichnet, daß** die gegenüberstehenden Oberflächen des Polschuhs bzw. Polstücks (19), in welchem die Stoßstange bzw. Stößel (16) gleitbar ist, und des beweglichen Kerns (7), welche ihren Spalt definieren, einen parallelen Verlauf besitzen.

15. Elektro-bzw. Magnetventil nach einem der vorhergehenden Ansprüche, **dadurch gekennzeichnet, daß** die Anfangsstellung des beweglichen Kerns (7), wenn der Induktionsstrom Null beträgt, mittels einer von außerhalb des Ventilgehäuses (4) her zugänglichen Schraube regelbar ist, welche die Zusammendrückung einer zwischen der Schraube und dem beweglichen Kern (7) angeordneten Feder (13) verändert, wobei die Rückholkraft dieser Feder (13) achsial in Richtung zu dem Polschuh bzw. Polstück (9), in welchem die Stoßstange bzw. Stößel (16) gleitbar ist, ausgeübt wird.

16. Elektro- bzw. Magnetventil nach einem der vorhergehenden Ansprüche, **dadurch gekennzeichnet daß** der bewegliche Kern (7) Mittel zur Filterung der äußeren Schwingungen aufweist, die Bewegungen der beweglichen Teile ohne Bezug zu dem steuernden Strom hervorrufen können.

17. Elektro- bzw. Magnetventil nach dem vorhergehenden Anspruch, **dadurch gekennzeichnet, daß** die genannten Filtermittel aus einer in dem beweglichen Kern angebrachten Axialleitung (24) bestehen, welche zwei zwischen diesem Kern und den festen Polschuhen bzw. Polstücken (8) im Inneren der Wicklung definierte Kammern (14, 23) miteinander verbinden, und daß die beiden Kammern (14, 23) mit einer Kühlflüssigkeit gefüllt sind, die im Falle einer Bewegung des Kerns (7) aus der einen Kammer (14, 23) über die Leitung in dem Kern in die andere Kammer übertritt.

18. Vorrichtung zur Steuerung des Durchsatzes eines Strömungsmittels, auf der Grundlage eines Elektro- bzw. Magnetventils gemäß einem der vorhergehenden Ansprüche, **dadurch gekennzeichnet, daß** das genannte Elektro- bzw. Magnetventil in einem kartuschen- bzw. patronenartigen Gehäuse integriert ist.

19. Anwendung einer Vorrichtung gemäß dem vorhergehenden Anspruch zur Steuerung des Durchsatzes der Kühlflüssigkeit eines Motors, insbesondere eines Kraftfahrzeugmotors.

**Claims**

1. Solenoid valve that has a response proportional to an inductor current powering an inductor coil (5) surrounding an axially moving core plunger (7) to which there is secured a pushrod (16) sliding in a pole piece (9) of the fixed magnetic circuit and collaborating with the inductor coil (5), actuating a valve comprising at least one valve shutter (25, 26) attached to an axial shaft (17, 27) and collaborating with a seat so as to open and close the valve, return means (32, 33) giving it a stable position of rest with respect to the seat when the inductor current is zero, each valve shutter (25, 26) being coaxial with the pushrod and actuated by it, **characterized in that** the mechanical connection between the shaft (17) of the valve shutter (25) and the pushrod (16) and, as appropriate, the shaft (27) of the adjacent valve shutter (26) is reduced to a point contact.

2. Solenoid valve according to the preceding claim, **characterized in that** the shaft (17, 27) of each valve shutter (25, 26) slides with respect to a valve body (28, 29) in which are made at least one fluid inlet orifice and at least one fluid exhaust orifice, and in which the seat for the valve shutter (25, 26) is formed.

3. Solenoid valve according to the preceding claim, **characterized in that** the means for returning the valve shutter (25, 26) away from the seat consist of a coil spring (32, 33) arranged around the shaft (17, 27) of the valve shutter (25, 26), in an axial housing thereof, and resting on the central part of the seat for the valve shutter (25, 26).

4. Solenoid valve according to either of Claims 2 and 3, **characterized in that** the valve shutter (25, 26) and the valve body (28, 29) exhibit symmetry of revolution, the shaft (17, 27) of each valve shutter (25, 26) sliding axially in the valve body (28, 29) the seat of which is orientated roughly at right angles to said axis.

5. Solenoid valve according to the preceding claim, **characterized in that** the external wall of the valve body (28, 29) has a peripheral housing designed to house an O-ring (34, 35).

6. Solenoid valve according to any one of the preceding claims, **characterized in that** each valve shutter (25, 26) has an elastomer seal (36, 37) overmoulded onto the portion of its peripheral wall that is designed to come into contact with the seat.

7. Solenoid valve according to any one of the preceding claims, **characterized in that** it comprises two coaxial valve shutters (25, 26) the valve bodies (28, 29) of which are superposed along the axis of the pushrod (16).

8. Solenoid valve according to the preceding claim, **characterized in that** the two valve shutters (25, 26) are kept by the return means (32, 33) away from their respective seats when the inductor current is zero.

9. Solenoid valve according to either of Claims 7 and 8, **characterized in that** the two assemblies made up of the valve shutters (25, 26) and of their respective bodies (28, 29) are screwed together.

10. Solenoid valve according to one of Claims 7 to 9, **characterized in that** the assemblies made up of the valve shutters (25, 26) and of their respective bodies (28, 29) are identical and made of the same material.

11. Solenoid valve according to any one of the preceding claims, **characterized in that** the magnetic circuit collaborating with the inductor coil (5) comprises, apart from the moving core plunger (7), two fixed pole pieces (8, 9) appearing to be coaxial with the core plunger (7), and between which the latter slides, the pole piece (9) in which the pushrod (16) slides and the core plunger (7) exhibiting, in the region defining their air gap, respective shapes making it possible to obtain a thrust force that is substantially constant regardless of the distance of the air gap, for a given magnitude of the inductor current.

12. Solenoid valve according to the preceding claim, **characterized in that** the moving magnetic core plunger (7) has cylindrical geometry, the pole piece (9) in which the pushrod (16) slides being equipped on its side facing said core plunger with a cylindrical housing of a diameter greater than that of the core plunger, defining two perpendicular orientations for the air gap when the core plunger enters said housing.

13. Solenoid valve according to any one of Claims 1 to 10, **characterized in that** the magnetic circuit collaborating with the inductor coil (5) comprises, apart from the moving core plunger (7), two fixed pole pieces (8, 9) appearing to be coaxial with said core plunger (7), and between which the latter slides, the pole piece (9) in which the pushrod (16) slides and the moving core plunger (7) exhibiting, in the region defining their air gap, respective shapes making it possible to obtain a thrust force that increases when the air gap distance decreases, for a given magnitude of the inductor current.

14. Solenoid valve according to the preceding claim, **characterized in that** the facing surfaces belonging to the pole piece (9) in which the pushrod (16) slides and belonging to the moving core plunger (7), and defining their air gap, are of parallel appearance.

15. Solenoid valve according to any one of the preceding claims, **characterized in that** the initial position of the moving core plunger (7), when the inductor current is zero, can be adjusted using a screw (12) accessible from outside the solenoid valve casing (4) and that alters the compression of a spring (13) arranged between it and the moving core plunger (7), the return force of said spring (13) being exerted axially toward the pole piece (9) in which the pushrod (16) slides.

16. Solenoid valve according to any one of the preceding claims, **characterized in that** the moving core plunger (7) comprises means for filtering out external vibrations likely to cause the moving parts to move in a way unrelated to the operating current.

17. Solenoid valve according to the preceding claim, **characterized in that** said filtering means consist of an axial duct (24) made in the moving core plunger (7), connecting two chambers (14, 23) that are defined between the latter and the fixed pole pieces (8), inside the coil (5), said chambers (14, 23) being filled with a cooling liquid that passes from one chamber (14, 23) to the other via the duct (24) in the core plunger (7) should the latter move.

18. Device for controlling the flow rate of a fluid, based on a solenoid valve according to any one of the preceding claims, **characterized in that** said solenoid valve is built into a casing of the cartridge type.

19. Use of a device according to the preceding claim to control the flow rate of the cooling liquid for an engine (or motor), particularly of a motor vehicle.

Fig. 1

Fig. 2

Fig. 3